**Europäisches Patentamt**

**European Patent Office**

**Office européen des brevets**

(19)

(11) Publication number: **0 038 890**

**A2**

(12) **EUROPEAN PATENT APPLICATION**

(21) Application number: **80304297.7**

(22) Date of filing: **28.11.80**

(51) Int. Cl.³: **H 01 G 4/24**

(30) Priority: **29.04.80 US 144908**

(43) Date of publication of application:
**04.11.81 Bulletin 81/44**

(84) Designated Contracting States:
**DE FR GB IT SE**

(71) Applicant: **Cornell-Dubilier Electric Corporation**
**150 Avenue L**
**Newark New Jersey 07101(US)**

(72) Inventor: **Hu, Jerry Shiao-Chung**
**1713 Wilkins Drive**
**Sanford North Carolina(US)**

(74) Representative: **Pears, David Ashley et al,**
**REDDIE & GROSE 16 Theobalds Road**
**London WC1X 8PL(GB)**

(54) **Self-healing capacitors.**

(57) A wound capacitor comprises two insulating films 10 and 12 alternating with two electrodes. Each electrode comprises a metallized area 14, 16 leaving free margins $m$ on the opposition edges of the insulating films respectively. Metal foils 18 and 20 overlie part of the widths of the metallized films extending in from opposite edges a little less than half the strip width. Accordingly there is no foil overlap and self-healing can occur by metallized film vapourization. However the contact of the metal foil strips with nearly half of the metallized films, providing low resistance, substantially reduces displacement current heating in the metallized films. Heavy terminals are bonded to the metal foil edges at the ends of the roll.

FIG.1

0038890

## SELF-HEALING CAPACITORS

The present invention relates to self-healing capacitors. Such capacitors include electrodes formed by vapour-depositing a thin metal film on a dielectric strip. In a capacitor winding, a local break-down through a dielectric layer results in current concentration at a tiny area of the metallized·film electrode. The metallized film becomes vapourized in the immediate area of the fault, so that the fault is cleared. The capacitor thus is self-healing.

Commonly each electrode is formed of a metallized film which extends to one margin of its supporting dielectric strip at the opposite ends of the winding. Electrical connection to the metallized films is usually provided by spraying metal on to the ends of the winding. Such a connection has imperfections along the edge of the metallized film, resulting in some added inductance and in some added resistance and consequent losses. Moreover, because the metallized film has high resistivity per unit square of its area, such capacitors have significant levels of ESR attributable to the metallized film. They tend to develop significantly more internal heat than capacitors having foil electrodes. For that reason, metallized-film capacitors are not known for high current-carrying capability.

Various forms of self-healing capacitors have been improved with respect to heat-dissipation by incorporating a strip of metal foil as one electrode, alternating with another electrode formed of metallized film. Each of these electrodes has one margin exposed at a respective end of the capacitor winding. It is largely through the one end of the winding where the foil extends that heat can be extracted from the capacitor winding. Heat is conducted in the metal foil across its entire width to one end of the winding. Correspondingly, current in the metallized film increases across its width by summation of increments across the width of the film to the metal-spray connection at one margin of the film, causing substantial self-heating in the metallized film.

Other forms of capacitors having "mixed" electrodes of metallized film and metal foil are also known in configurations intended for higher-voltage application. In one example of such capacitors, two metal strips are separated edge-wise and wound between two dielectric strips, with the remote edges of the metal-foil electrodes extending to respective ends of the winding. One of the dielectric strips has a metallized film opposite to but spaced by one or more dielectric layers from both metal foil electrodes. No external connection is made to the metallized film. In going from one metal-foil electrode to the opposite electrode of metal foil, the potential is divided between two dielectric layers. In effect there are two capacitors connected in series, each comprising a metal foil electrode and a metallized film electrode separated by a dielectric strip. The result is relatively great bulk and low capacitance.

The object of the present invention is to provide an improved self-healing capacitor useful in high-current applications and at high frequencies, and capable of carrying relatively high current by virtue of effective heat dissipation, the construction being particularly applicable to low-voltage, remarkably compact electrostatic capacitors.

The invention is defined in claim 1 below to which reference should now be made.

Preferably the two metal foil strips are of equal width and their inner edges approach but do not quite reach the midpoint of the winding, measured along its axis.

The construction is inherently capable of ideal dissipation of heat from the interior of the capacitor toward its opposite ends. The optimum length of current path in the free area of each metallized film is equal to approximately one half the axial length of the winding. By virtue of this feature, the maximum current density in the metallized film is only half that in comparable prior art capacitors, and the resulting heat due to current flow in the metallized film is reduced to approximately one quarter of that in comparable capacitors.

Highly effective connection between the metal strip and the underlying metallized film of each electrode is readily attainable by virtue of the large area of contact between them. The projecting margins of the two metal foil strips are exposed for effective heat dissipation at the ends of the winding. The convolutions of the margins are short-circuited together so as to impart a non-inductive property to the winding.

The capacitors according to the invention combine a number of desirable properties. They are self-healing, they have high-current-carrying capacity, and have low-impedance at high-frequencies and they are amenable to compact design especially where the voltage rating is low.

The invention will be described in more detail, by way of example, with reference to the accompanying drawings in which:

Figure 1 is an enlarged diagramatic perspective view of a portion of a capacitor winding embodying the present invention,

Figure 2 is a cross-section of the capacitor winding of Figure 1 as viewed on the line 2--2 therein, including a third convolution of the winding in phantom; and

Figures 3 and 4 are lateral views of completed capacitor sections incorporating the winding of Figures 1 and 2.

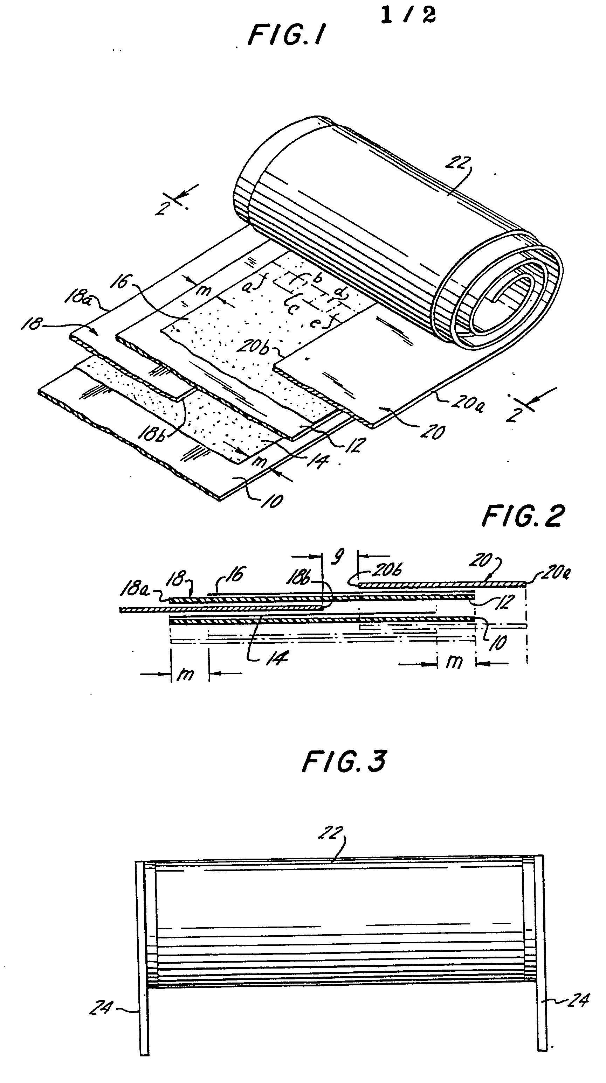

In Figures 1 and 2 dielectric strips 10 and 12 of a polycarbonate for example bear metallized films 14 and 16 which are each separated from an opposite edge of their respective dielectric strips by a bare margin m. Strips 18 and 20 of metal foil, e.g. aluminium foil, are in contact with and overlie a substantial area of each metallized film 14 and 16. Thus, foil strip 18 overlies metallized film 14 and is in excellent physical and electrical contact therewith. Metal foil strip 20 overlies a substantial area of metallized film 16 and is in excellent contact therewith. The foil strips 18 and 20 have outer margins 18a and 20a that project outward beyond the margins of the dielectric strips 10 and 12 at the ends of the winding. The inner margins 18b and 20b of the strips approach but do not quite reach the mid-point of the winding, measured along its axis. Thus, in Figure 2 there is a gap g between the inner edges 18b and 20b of the foil strips.

In an example, the aluminium foil was 0.0056 mm thick and the polycarbonate dielectric strips were 0.0051 mm thick, bearing aluminium metallization. The margin m and gap g were 0.8 mm wide.

The foil strips make dependable, large-area contact with the metallized-film. Neither foil extends so far as to overlie or overlap the other. For that reason, a localized fault that develops anywhere involves a path through the faulty dielectric to an available fault-clearing area of metallized film, ie an area that does not underlie and contact a metal foil strip.

Each area of metal foil and the area of metallized film that are in contact form an electrode area of low resistivity, conducting current to the extended margin 18a or 20a without developing appreciable heat. The free area of metallized film of each electrode which does not underlie a metal foil does develop heat due to conduction in the film. Thus, an elemental area $a$ (Fig 1) develops capacitive displacement current $i_a$ which flows through film areas $c$, $d$ and $e$ to the foil 20. The current $i_a$ adds to the displacement current in the areas $b$, $c$ and $d$, ie the displacement currents $i_a$, $i_b$, $i_c$ and $i_d$ are additive and flow in area $e$ (plus the displacement current $i_e$ in the area $e$) in reaching foil 20. The resulting heat developed in the incremental area of the metallized film nearest the metal foil due to flow of current in the metallized film from its free edge to the foil is the square of the total of the increments of displacement current of the differential areas of the metallized film from its free edge to the inner edge of the foil. If terminal connection were made to the metallized film 16 only along one of its edges (without the overlying foil) there would be twice the number of differential areas of any given size gathering differential displacement currents, from the free edge to the terminal connection, but there would be eight times the loss and the heat developed due to current flow in the metallized film. Its resistivity is (for example) 1 to 2 ohms per square. This is an important factor in internal heating of the capacitor.

Not only is there a reduction in heat generated by flow of current in the metallized film but especially cool operation is realized because the maximum length of heat-conduction path in the foils to the terminals is relatively short, being only about half the width of the electrodes.

Finally, for compact, economical capacitors rated at a low voltage, a single thickness of dielectric strip separates the opposite terminals of the capacitor, making possible large values of capacitance for any available thickness and area of dielectric strip. Compact capacitors having large capacitance at low voltage become possible since the construction does not compel use of double thicknesses of dielectric. Using a polycarbonate strip 0.051 mm thick, an area of about 1560 $cm^2$ of each dielectric strip yields 1.0 microfarad of capacitance.

The capacitor winding 22 of Figures 1 and 2 is completed by applying an end-spray of zinc to the exposed foil margins, and soldering copper terminal strips 24 (Fig 3) to the ends of the winding. These capacitors have application (for example) in a resonant circuit for the switching type of regulated power supplies. Examples of capacitors made as described with two terminals as shown in Fig 3 have a rating of 6.5 microfarads at 100 volts. According to test reports, at 44 kHz, they are capable of carrying 65 Amperes with a maximum core temperature rise of $10.5^{\circ}$C. In the same resonant circuit, at 75 Amperes, a $25.5^{\circ}$C core temperature rise was reported. Such two terminal applications provide efficient operation up to frequencies of approximately 250 kilohertz.

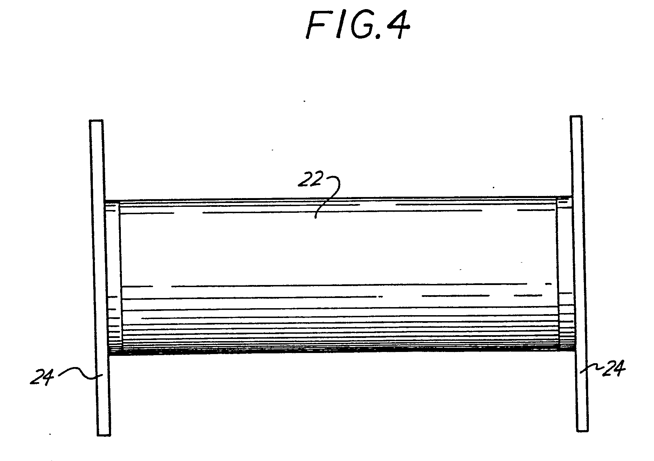

In Figure 4 the terminals 24 as shown represent relatively heavy strips of copper capable of effectively conducting heat away from the wound capacitor section 22. When the input signal to the capacitor of Figure 4 is connected to the upper ends (input) of the strip terminals 24 and the load is connected to the lower ends (output) of those strip terminals, these capacitors are capable of operating up to about one megahertz with similar results and reduced transfer impedance from the input terminals to the output terminals.

## CLAIMS

1.    A self-healing capacitor having dielectric strips and mixed metallized film/metal foil electrodes alternating in a winding, characterised in that each electrode comprises a metallized film (14, 16) on a respective one of the dielectric strips (10, 12) and a strip of metal foil (18, 20) overlying part of the respective metallized film, thus leaving free an area of the metallized film not underlying its foil strip, the metal foil strips having outer margins (18a, 20a) at the respective ends of the winding and inner margins (18b, 20b) near but not overlapping each other, most of the free area of each metallized film (14, 16) being opposite to the metal foil strip (20, 18) of the other electrode.

2.    A capacitor according to claim 1, characterised in that the strips of metal foil (18, 20) extend close to the midpoint of the winding, measured parallel to its axis.

3.    A capacitor according to claim 1 or 2, characterised in that there is no more than one strip of dielectric material (10 or 12) separating the electrodes from each other.

4.    A capacitor according to claim 1, 2 or 3, characterised in that convolutions of the outer margins (18a, 20a) of the strips of metal foil in the winding are short-circuited together.

5.    A capacitor according to claim 4, characterised in that terminal strips (24) of metal massive relative to the foil are united to the short-circuited convolutions, each terminal strip extending in opposite directions from the winding to provide a pair of input connections at first ends of the terminal strips and a pair of output connections at the other ends of the terminal strips.

0038890

6.    A capacitor according to claim 4, characterised in that terminal strips (24) of metal massive relative to the foil are united to the short-circuited convolutions, each terminal strip extending from the winding to provide a connection at each end of the winding.

## FIG.1

## FIG.2

## FIG.3

FIG.4